# EUROPÄISCHE PATENTSCHRIFT

(11) **EP 3 931 437 B1**
(45) Veröffentlichungstag und Bekanntmachung des Hinweises auf die Patenterteilung: **26.11.2025**
(21) Anmeldenummer: 20707607.6
(22) Anmeldetag: 26.02.2020
(51) Int. Cl.: F03D 7/02

(54) **VERFAHREN ZUM BETREIBEN EINER WINDENERGIEANLAGE IM FALLE EINES NETZFEHLERS**
METHOD FOR OPERATING A WIND TURBINE IN THE EVENT OF A GRID FAULT
PROCÉDÉ SERVANT À FAIRE FONCTIONNER UNE ÉOLIENNE EN CAS DE DÉFAILLANCE DE RÉSEAU

(30) Priorität: 26.02.2019 DE 102019104892
(43) Veröffentlichungstag der Anmeldung: 05.01.2022
(73) Patentinhaber: Wobben Properties GmbH, 26607 Aurich (DE)
(72) Erfinder: MACKENSEN, Ingo, 26607 Aurich (DE); BUSKER, Kai, 26629 Großefehn (DE); GERTJEGERDES, Stefan, 26603 Aurich (DE)
(74) Vertreter: Eisenführ Speiser
(86) Internationale Anmeldenummer: PCT/EP2020/055019
(87) Internationale Veröffentlichungsnummer: WO 2020/174003

(56) Entgegenhaltungen:
- EP-A2- 1 961 957
- DE-A1- 102008 037 449

## Beschreibung

Die vorliegende Erfindung betrifft ein Verfahren zum Betreiben einer Windenergieanlage und die vorliegende Erfindung betrifft auch eine entsprechende Windenergieanlage.

Windenergieanlagen sind bekannt, sie erzeugen elektrische Leistung aus Wind, um diese in ein elektrisches Versorgungsnetz einzuspeisen. Meist, oder zumindest bevorzugt, erfolgt dies im sogenannten Netzparallelbetrieb, in dem die Windenergieanlagen genau so viel Leistung in das Netz einspeisen, wie sie aufgrund des vorherrschenden Windes und aufgrund etwaiger Maximalwerte erzeugen können.

Tritt ein Netzfehler auf, der zur Folge hat, dass die Windenergieanlage keine Leistung in das elektrische Versorgungsnetz einspeisen kann, so muss die Windenergieanlage ihren Betrieb reduzieren und kann beispielsweise ihren Betrieb einstellen, bis der Netzfehler wieder behoben ist.

Das hat aber zur Folge, dass sich für die Windenergieanlage unnötige Standzeiten ergeben können. Es kann daher sinnvoll sein, die Windenergieanlage während der Dauer des Netzfehlers zumindest trudeln zu lassen, oder in einem reduzierten Betrieb zu betreiben, in dem sie gerade so viel Leistung erzeugt, wie sie selbst verbraucht.

Ein solch reduzierter Betrieb ist beispielsweise in dem europäischen Patent EP 2 146 095 B1 beschrieben. Dort wird bei Erkennen einer Netzstörung die Windenergieanlage so weit heruntergefahren, dass genug Leistung erzeugt wird, um Basisfunktionen noch zu gewährleisten. Dabei erfolgt eine Verstellung der Rotorblätter aus einem Energiespeicher. Hierbei können allerdings durch Vorsehen und Unterhalten des Energiespeichers zusätzliche Kosten entstehen.

Das Deutsche Patent- und Markenamt hat in der Prioritätsanmeldung zu vorliegender Anmeldung folgenden Stand der Technik recherchiert: DE 10 2008 037 449 A1 und US 2016/0111872 A1.

Der vorliegenden Erfindung liegt somit die Aufgabe zugrunde, zumindest eins der oben genannten Probleme zu adressieren. Insbesondere soll eine Lösung vorgeschlagen werden, bei der eine Windenergieanlage, mit möglichst wenig Aufwand im Falle eines Netzfehlers, bei dem nicht in das elektrische Versorgungsnetz eingespeist werden kann, insoweit weiterbetrieben wird, dass wenigstens ihre Basisfunktionen ausgeführt werden können. Zumindest soll zu bisher bekannten Lösungen eine alternative Lösung vorgeschlagen werden.

Erfindungsgemäß wird ein Verfahren zum Betreiben einer Windenergieanlage vorgeschlagen. Es wird dabei von einer Windenergieanlage ausgegangen, die einen Generator und einen aerodynamischen Rotor aufweist. Der aerodynamische Rotor weist wiederum mehre Rotorblätter auf, die insbesondere in ihrem Blattwinkel verstellbar sind. Insoweit geht das Verfahren von einer üblichen Windenergieanlage aus.

In einem ersten Schritt wird vorgeschlagen, dass elektrische Leistung mittels des Generators aus Wind erzeugt wird. Von dieser erzeugten elektrischen Leistung wird ein erster Teil als ein Hilfsleistungsteil zum Versorgen von zum Betrieb der Windenergieanlage benötigter Hilfseinrichtungen verwendet. Solche Hilfseinrichtungen, die Leistung zu ihrem eigenen Betrieb benötigen, beinhalten besonders eine Steuereinrichtung, insbesondere einen Steuerrechner oder Prozessrechner, zum Steuern der Windenergieanlage. Sie beinhalten vorzugsweise auch Blattverstelleinrichtungen zum Verstellen der Rotorblätter in ihrem Blattwinkel. Ebenso umfassen sie vorzugsweise eine Azimutverstelleinrichtung bzw., je nach Aufbau, mehrere davon, zum Verstellen der Windenergieanlage in ihrer Azimutausrichtung. Mit solchen Azimutverstelleinrichtungen wird also insbesondere eine Gondel auf einem Turm gedreht, meist nämlich in den Wind gedreht.

Solche Hilfseinrichtungen benötigen dabei oftmals keine konstante Leistung, sondern zeichnen sich durch einen schwankenden Leistungsverbrauch aus. Besonders die beispielhalft genannten Blattverstelleinrichtungen und Azimutverstelleinrichtungen werden nur sporadisch verwendet, sodass auch ihre Leistungsaufnahme entsprechend schwankt. Ihre Leistungsaufnahme kann sich sogar sprunghaft ändern, wenn sie nämlich zwischen einem eingeschalteten und einem ausgeschalteten Zustand wechseln.

Aber auch der genannte Prozessrechner kann je nach Auslastung mehr oder weniger Leistung verbrauchen. Gleiches kann auch beispielsweise für Kühlreinrichtungen gelten, die temperaturabhängig gesteuert sein können und daher entsprechend mehr oder weniger Leistung aufnehmen.

Die Variation dieses Hilfsleistungsteils ist dabei nicht beliebig, sondern auf eine Hilfsleistungsobergrenze beschränkt. Eine solche Hilfsleistungsobergrenze kann beispielsweise einen Wert darstellen, wenn sämtliche Hilfseinrichtungen betrieben werden. Einige Hilfseinrichtungen, wie beispielsweise ein Erregersteller zum Einstellen einer Erregerleistung eines fremderregten Synchrongenerators, falls die Windenergieanlage einen solchen verwendet, können abhängig vom Arbeitspunkt der Windenergieanlage unterschiedlich viel Leistung aufnehmen.

Jedenfalls wird ein Teil der erzeugten Leistung für diese Hilfseinrichtungen benötigt und ein zweiter Teil der erzeugten elektrischen Leistung, also insbesondere die verbleibende Leistung, nachdem der erste Teil entnommen wurde, wird als Einspeiseleistungsteil in ein elektrisches Versorgungsnetz eingespeist. Insoweit kann das einen üblichen Betriebsfall einer Windenergieanlage beschreiben.

Es wird nun weiter vorgeschlagen, dass das elektrische Versorgungsnetz auf einen Netzfehler überprüft wird. Hier wird ein Netzfehler bezeichnet, der ein Einspeisen elektrischer Leistung der Windenergieanlage in das elektrische Versorgungsnetz nicht zulässt. Das kann besonders technische Gründe haben, aber auch eine Situation betreffen, bei der ein Netzbetreiber des elektrischen Versorgungsnetzes vorschreibt, dass nicht in das elektrische Versorgungsnetz in dem Moment eingespeist wird. Meist hat eine solche Vorschrift allerdings ebenfalls einen technischen Grund.

Wird hierbei ein solcher Netzfehler erkannt, wird vorgeschlagen, den Betrieb der Windenergieanlage möglichst unverändert fortzusetzen. Allerdings wird das Erzeugen der elektrischen Leistung aus Wind auf eine gedrosselte Leistung reduziert.

Es wird dabei vorgeschlagen, dass die gedrosselte Leistung in ihrer Höhe der Hilfsleistungsobergrenze entspricht, oder darüber liegt. Insbesondere kann vorgeschlagen sein, dass die gedrosselte Leistung um maximal 30 % über der Hilfsleistungsobergrenze liegt. Es kommt aber auch in Betracht, dass die gedrosselte Leistung genau auf die Höhe der Hilfsleistungsobergrenze eingestellt wird, wobei die gedrosselte Leistung minimal darüber liegen könnte, oder minimal darunter.

Zum Betreiben der Hilfseinrichtungen wird dann die benötigte Hilfsleistung aus der gedrosselten Leistung verwendet. Die Windenergieanlage befindet sich nun also in einem Zustand, in dem sie nicht in das elektrische Versorgungsnetz einspeist und hat dafür ihre Leistungserzeugung reduziert, nämlich auf die gedrosselte Leistung, und diese gedrosselte Leistung ist so groß gewählt, dass sie die Hilfseinrichtungen versorgen kann, selbst wenn diese in ihrem Leistungsbedarf die Hilfsleistungsobergrenze erreichen. Die Hilfseinrichtungen können also auch in diesem Netzfehlerfall normal weiterbetrieben werden.

Es wird nun weiter vorgeschlagen, dass eine dabei verbleibende Restleistung der gedrosselten Leistung verbraucht wird. Insbesondere wird vorgeschlagen, dass sie in Wärme umgewandelt wird.

Hier liegt der Gedanke zugrunde, dass die Windenergieanlage im Netzfehlerfall bis auf das Einspeisen elektrischer Leistung normal weiterbetrieben werden kann, ohne dass dafür ein zusätzlicher elektrischer Energiespeicher, wie beispielsweise ein zusätzlicher elektrischer Batteriespeicher, benötigt wird. Dazu wird nämlich vorgeschlagen, dass der schwankende Leistungsbedarf der Hilfseinrichtungen im Grunde nicht über einen Energiespeicher gepuffert wird, sondern dadurch berücksichtigt wird, dass im Grunde sein Maximalwert an Leistung erzeugt wird. Soweit die benötigte Hilfsleistung darunterliegt, kann dieser überschüssige Teil einfach verbraucht, also besonders in Wärme umgewandelt werden. Dem liegt insbesondere auch die Erkenntnis zugrunde, dass die damit verbundene Energieverschwendung keine Rolle spielt, weil es während des Netzfehlers für diese Energie keine Verwendung gibt und sie auch nicht zwischengespeichert werden kann. Gleichwohl kann aber die Verwendung eines zusätzlichen Speichers vermieden werden.

Gemäß einer Ausführungsform wird vorgeschlagen, dass zum Einspeisen elektrischer Leistung ein Wechselrichter mit einem Gleichspannungszwischenkreis verwendet wird. Ein solcher Wechselrichter verwendet den Gleichspannungszwischenkreis als Leistungseingang oder Energiequelle, von dem aus er ein Wechselspannungssignal, bzw. ein Wechselstromsignal zum Einspeisen in das elektrische Versorgungsnetz erzeugt. Statt eines Wechselrichters können auch mehrere Wechselrichter vorhanden sein, bzw. mehrere Wechselrichtermodule können zusammen auch als Wechselrichter bezeichnet werden. Sie können jeweils einen Gleichspannungszwischenkreis verwenden, oder einen gemeinsamen.

Dafür wird vorgeschlagen, dass beim Erkennen des Netzfehlers die gedrosselte Leistung, oder ein Teil davon, an den Gleichspannungszwischenkreis übertragen wird, ohne dass der Wechselrichter Leistung in das elektrische Versorgungsnetz einspeist. Der Gleichspannungszwischenkreis erhält somit die vom Generator erzeugte, nun gedrosselte Leistung und damit kann von dem Gleichspannungszwischenkreis diese Leistung weiter an die Hilfseinrichtungen verteilt werden. Im einfachsten Fall wird die gesamte gedrosselte Leistung an den Gleichspannungszwischenkreis gegeben und von dort aus weiterverteilt. Es kommt aber auch in Betracht, dass nur ein Teil der gedrosselten Leistung an den Gleichspannungszwischenkreis übertragen wird, wenn ein anderer Teil der gedrosselten Leistung bereits, bezogen auf den Leistungsfluss, vor dem Gleichspannungszwischenkreis verwendet wird. So kommt besonders in Betracht, dass der Wechselrichter in einem Turmfuß angeordnet ist und Hilfseinrichtungen, die im Bereich der Gondel betrieben werden, bereits dort mit Leistung versorgt werden. Hilfseinrichtungen, die im Turmfuß betrieben werden, wie beispielsweise eine Kühleinrichtung des Wechselrichters, können ihre Leistung aus dem Gleichspannungszwischenkreis beziehen.

Es kommt aber auch in Betracht, dass einige oder sogar alle Hilfseinrichtungen, die in der Gondel angeordnet sind, wie bspw. eine Azimutverstelleinrichtung und/oder eine Pitchverstelleinrichtung, direkt oder indirekt mit Leistung aus dem Gleichspannungszwischenkreis versorgt werden.

Zumindest wird vorgeschlagen, dass die verbleibende Restleistung, die also von den Hilfseinrichtungen nicht verwendet wird, in den Gleichspannungszwischenkreis eingespeist wird.

Dazu wird weiter vorgeschlagen, dass Leistung aus dem Gleichspannungszwischenkreis, insbesondere die verbleibende Restleistung, oder zumindest ein Teil der verbleibenden Restleistung, mittels einer Chopper-Schaltung in einen Chopper-Widerstand zur Umwandlung in Wärme abgeführt wird. Eine solche Chopper-Schaltung kann durch entsprechend getaktete Ansteuerung eines Halbleiterschalters einen gepulsten Strom aus dem Gleichspannungszwischenkreis erzeugen und dem Chopper-Widerstand, der auch als Widerstandsbank ausgebildet sein kann, zuführen. Dort wird dieser Strom und damit die so aus dem Gleichspannungszwischenkreis abgeleitete Leistung in Wärme umgewandelt und damit verbraucht.

Damit kann besonders erreicht werden, dass die Hilfseinrichtungen auf einfache Art und Weise kontinuierlich mit der benötigten Hilfsleistung versorgt werden können. Der Generator erzeugt dafür eine ausreichende Menge an Leistung und von der wird jede Hilfseinrichtung nach ihrem aktuellen Bedarf versorgt. Der Generator erzeugt dabei wenigstens so viel Leistung, wie all diese Hilfseinrichtungen in dem betreffenden Arbeitspunkt maximal benötigen und erzeugt damit regelmäßig mehr Leistung, als benötigt wird. Diese zusätzliche Leistung ist die verbleibende Restleistung und kann auf einfache Art und Weise aus dem Gleichspannungszwischenkreis mittels der Chopper-Schaltung abgeführt und im Ergebnis verbraucht werden.

Insbesondere wird vorgeschlagen, dass die Chopper-Schaltung Leistung aus dem Gleichspannungszwischenkreis in Abhängigkeit einer erfassten Zwischenkreisspannung abführt. Insbesondere kann dafür eine erste Referenzspannung vorgegeben werden, sodass die Chopper-Schaltung zu arbeiten beginnt, sobald die Zwischenkreisspannung diese erste Referenzspannung überschreitet. Es kann auch eine weitere, höhere zweite Referenzspannung vorgegeben werden, sodass die erste und zweite Referenzspannung ein Referenzband aufspannen. Dafür kann vorgesehen sein, dass die Chopper-Schaltung einen umso größeren Strom erzeugt, je weiter die Zwischenkreisspannung oberhalb der ersten Referenzspannung an die zweite Referenzspannung herankommt.

Auf diese Art und Weise kann die Chopper-Schaltung und damit das Abführen der verbleibenden Restleistung auf einfache Art und Weise gesteuert werden. Dabei kann insbesondere auch die Zwischenkreisspannung gesteuert werden, nämlich auf die erste Referenzspannung, wenn nur eine Referenzspannung vorgegeben wird, oder auf eine Spannung in dem Spannungsband zwischen der ersten und zweiten Referenzspannung, wenn beide Referenzspannungen vorgegeben werden. Das kann besonders auch dann vorteilhaft sein, wenn der Netzfehler wieder behoben ist und die Windenergieanlage dann möglichst bald wieder Leistung in das elektrische Versorgungsnetz einspeisen soll. Wenn sie dann in dem Moment bereits eine Zwischenkreisspannung mit gewünschter Höhe aufweist, kann sie sofort Leistung in das elektrische Versorgungsnetz einspeisen. Insbesondere kann sie auch sofort Leistung in Höhe der bis dahin abgeführten verbleibenden Restleistung in das elektrische Versorgungsnetz einspeisen.

Erfindungsgemäβ wird die Hilfsleistungsobergrenze in Abhängigkeit eines aktuellen Arbeitspunktes der Windenergieanlage bestimmt, in Abhängigkeit von Systemeigenschaften der Windenergieanlage bestimmt, und/oder in einem vorbestimmten Messzeitraum vor dem Auftreten des Netzfehlers erfasst.

Die Hilfsleistungsobergrenze kann durch die Leistung definiert sein, die alle Hilfseinrichtungen zusammen maximal aufnehmen können. Ein solcher Wert kann aus dem Systemeigenschaften der Windenergieanlage, also wie die Windenergieanlage aufgebaut ist, und besonders welche Hilfseinrichtungen sie hat, als ein maximaler Wert berechnet werden. In diesem Fall, sollte die Hilfsleistungsobergrenze allein so einmalig für die Windenergieanlage bestimmt werden, wäre sie ausschließlich in Abhängigkeit der Systemeigenschaften der Windenergieanlage bestimmt.

Oftmals kann ein solcher Maximalwert aber nur in Ausnahmefällen oder möglicherweise nie erreicht werden. Weist die Windenergieanlage beispielsweise Blattheizungen zur Rotorblattenteisung auf, so werden diese nur bei entsprechend niedrigen Temperaturen benötigt. Liegen diese niedrigen Temperaturen vor, werden wiederum Kühleinrichtungen in der Windenergieanlage nicht ihre maximale Leistungsaufnahme erreichen. Daher wird vorgeschlagen, die Hilfsleistungsobergrenze ganz oder teilweise, in Abhängigkeit eines aktuellen Arbeitspunktes der Windenergieanlage zu bestimmen.

Die Hilfsleistungsobergrenze ganz oder teilweise in Abhängigkeit eines aktuellen Arbeitspunktes der Windenergieanlage zu bestimmen, ist auch sinnvoll, wenn, im Falle eines fremderregten Synchrongenerators eine Leistungsaufnahme eines Erregerstellers vom Arbeitspunkt abhängt. Je nach Arbeitspunkt der Windenergieanlage benötigt dieser Erregersteller nämlich mehr oder weniger Leistung, wobei sich der Arbeitspunkt aber nicht schnell, jedenfalls üblicherweise nicht sprunghaft verändert.

Anders ist es bei einer Azimutverstelleinrichtung, die grundsätzlich immer anspringen kann, um eine Azimutnachstellung durchzuführen, weil sich die Windrichtung geändert hat. Für eine solche Azimutverstelleinrichtung als Hilfseinrichtung sollte daher ihre Leistungsaufnahme berücksichtigt werden, wenn sie betätigt wird. Wird sie nicht betätigt, stellt ihre dann nur noch potenzielle Leistungsaufnahme somit einen Teil der Restleistung dar, die abgeführt werden müsste.

Auch bei einer Blattverstelleinrichtung kann erwartet werden, dass sie gelegentlich die Rotorblätter nachstellen, bzw. verstellen muss. Allerdings kommen bei einer Blattverstelleinrichtung Arbeitspunkte in Betracht, bei denen nicht mit einer Verstellung zu rechnen ist, beispielsweise besonders im Teillastbetrieb, wenn der vorherrschende Wind schwach ist. Liegt der vorherrschende Wind aber oberhalb einer Nennwindgeschwindigkeit, so ist zu erwarten, dass die Windenergieanlage auf Windschwankungen mit Nachstellen der Rotorblätter reagiert, sodass dann die Blattverstelleinrichtungen häufig benutzt werden. Entsprechend kann arbeitspunktabhängig eine Leistungsaufnahme der Blattverstelleinrichtungen bei der Berechnung der Hilfsleistungsobergrenze berücksichtigt werden, oder nicht berücksichtigt werden. Gleiches gilt, wenn statt Nennleistung eine reduzierte Leistung eingehalten wird.

Außerdem oder alternativ kann stattdessen die Hilfsleistungsobergrenze messtechnisch erfasst werden, indem die benötigte Hilfsleistung vorm Auftreten des Netzfehlers erfasst wurde und sich daraus die Hilfsleistungsobergrenze unmittelbar ergibt. Eine solche verbrauchte Hilfsleistung kann sich dabei als Differenz aus der eingespeisten Leistung, die üblicherweise bekannt ist, und der erzeugten Generatorleistung ergeben, die ebenfalls erfasst werden kann. Es braucht also nicht die Leistungsaufnahme jeder einzelnen Hilfseinrichtung einzeln erfasst zu werden. Aus einer solchen Betrachtung können sich auch Erfahrungswerte ableiten lassen, die mit dem jeweils aktuellen Arbeitspunkt in Bezug gesetzt werden. Es wird also die benötigte Hilfsleistung messtechnisch erfasst und aufgezeichnet, was für ein Arbeitspunkt vorlag. Später kann dann abhängig vom Arbeitspunkt und dieser gemessenen Leistungswerte die Hilfsleistungsobergrenze abgeleitet werden.

Besonders wird vorgeschlagen, dass bei dem Erkennen des Netzfehlers der Hilfsleistungsteil weiterhin vom Generator zur Versorgung an die Hilfseinrichtungen übertragen wird, ohne zusätzliche Zwischenspeicherung in einem elektrischen Speicher. Das Verfahren arbeitet also so, dass diese von den Hilfseinrichtungen weiterhin benötigte Leistung unmittelbar vom Generator, jedenfalls ohne zusätzliche Zwischenspeicherung, den Hilfseinrichtungen bereitgestellt wird. Zwar kann dieser Hilfsleistungsteil zumindest teilweise an einen Gleichspannungszwischenkreis übertragen werden, der üblicherweise Zwischenkreiskondensatoren aufweist, es ist aber keine zusätzliche Zwischenspeicherung in einem elektrischen Speicher.

Zum einen können solche Zwischenkreiskondensatoren nicht als elektrische Speicher zum Zwischenspeichern einer relevanten Energiemenge, die zum Betreiben der Hilfseinrichtungen benötigt wird, angesehen werden, zum anderen wäre dies auch keine zusätzliche Zwischenspeicherung, denn der Gleichspannungszwischenkreis mit entsprechendem Zwischenkreiskondensatoren ist auch im Betrieb ohne Netzfehler vorhanden und besonders wird auch die Leistung, die zum Versorgen von Hilfseinrichtungen diesen über den Gleichspannungszwischenkreis zugeführt wird, sowohl im Netzfehlerfall als auch im Betrieb ohne diesen Netzfehler den jeweiligen Hilfseinrichtungen über den Gleichspannungszwischenkreis zugeführt. Somit erfolgt keine zusätzliche Zwischenspeicherung in einen elektrischen Speicher.

Somit ist besonders vorgesehen, dass die Übertragung vom Generator zu den Hilfseinrichtungen ohne längerfristige Zwischenspeicherung in einem elektrischen Speicher erfolgt. Das bedeutet besonders, dass diese Übertragung ohne Zwischenspeicherung über einen Zeitraum von mehr als 100 ms auskommt. Besonders ist in einer solchen etwaigen Zwischenspeicherung für einen sehr kurzen Zeitraum unter 100 ms keine Speicherung im Sinne des Vorhaltens von Energie zu verstehen, sondern allenfalls im Sinne einer Signalglättung.

Besonders wird vorgeschlagen, dass bei dem Erkennen des Netzfehlers eine Leistungsversorgung der Hilfseinrichtungen unverändert fortgesetzt wird. Ergänzend oder alternativ wird vorgeschlagen, dass die Hilfseinrichtungen nicht gedrosselt werden. Es wurde besonders erkannt, dass es vorteilhaft ist, den Betrieb der Windenergieanlage möglichst unverändert fortzusetzen. Zwar muss die Einspeisung verringert, bzw. unterbrochen werden, und entsprechend ist auch ein Reduzieren der Generatorleistung zweckmäßig, aber die Leistungsversorgung der Hilfseinrichtungen braucht bei den vorgeschlagenen Verfahren keine Änderung zu erfahren. Es kann dann besonders die gesamte Versorgungsstruktur weiterverwendet werden. Das betrifft eine physikalische Strukturwie verwendete Leitungen und Verbindungen, im Wesentlichen aber auch die Steuerungsstruktur, mit der die entsprechenden Hilfseinrichtungen angesteuert werden.

Besonders wurde auch erkannt, dass die Hilfseinrichtungen nicht gedrosselt zu werden brauchen, was dann den Vorteil hat, dass Strukturen und insbesondere Steuerungen im Grunde normal weiterverwendet werden können. Besonders braucht kein Notfallplan erstellt zu werden.

Gemäß einer Ausführungsform wird vorgeschlagen, dass beim Erkennen des Netzfehlers die Windenergieanlage vom elektrischen Versorgungsnetz getrennt wird. Ein solcher Netzfehler, der eine solche Netztrennung zur Folge hat, kann ein schwerwiegender Netzfehler sein und auch dafür wird das erfindungsgemäße Verfahren vorgeschlagen, das die Windenergieanlage auch ohne Einspeisung in das elektrische Versorgungsnetz dem Grunde nach weiterbetreiben kann. Durch die Netztrennung wird auch ausgeschlossen, dass die Windenergieanlage Leistung für Hilfseinrichtungen aus dem elektrischen Versorgungsnetz bezieht. Auch dieser Fall kann vorteilhafterweise mit abgedeckt werden.

Gemäß einer Ausführungsform wird vorgeschlagen, dass bei dem Erkennen des Netzfehlers und im Anschluss daran die Windenergieanlage weiterbetrieben wird, ohne elektrische Leistung in das elektrische Versorgungsnetz einzuspeisen, bis der Netzfehler behoben ist.

Dazu wird weiter vorgeschlagen, dass dies so erfolgt, dass ohne Verzögerung das Einspeisen elektrischer Leistung in das elektrische Versorgungsnetz wiederaufgenommen werden kann und außerdem, oder alternativ, das elektrische Versorgungsnetz oder ein Teil davon in einem Schwarzstartmodus wieder hochgefahren werden kann.

Hier liegt besonders der Gedanke zugrunde, dass im Falle eines Netzwiederaufbaus oder eines Schwarzstarts des elektrischen Versorgungsnetzes oder eines Teils davon, teilweise schnell gehandelt werden muss. Verzögerungszeiten, die sich dadurch ergeben, dass eine Windenergieanlage erst in einen Arbeitspunkt hochgefahren werden muss, können hier hinderlich sein. Wird die Windenergieanlage, wie vorgeschlagen, im Netzfehlerfall zunächst im Wesentlichen normal weiterbetrieben, ist sie am Ende des Netzfehlers sofort verfügbar und kann sofort Leistung einspeisen. Das ist bei dem vorgeschlagenen Verfahren sogar ohne zusätzlichen Speicher möglich.

Besonders bevorzugt wird das so durchgeführt, dass die Zwischenkreisspannung des Gleichspannungszwischenkreises des Wechselrichters mittels der Chopper-Schaltung während des Netzfehlers auf eine vorbestimmte Bereitschaftsspannung gesteuert wird. Das ist genau eine solche Zwischenkreisspannung, mit der der Wechselrichter im Grunde auf Abruf sofort in das elektrische Versorgungsnetz einspeisen kann, oder dieses im Falle des Schwarzstarts sogar aufbauen kann. Durch die Chopper-Schaltung kann diese Spannung am Gleichspannungszwischenkreis regelungstechnisch eingestellt werden, also ausgeregelt werden. Das hat zusätzlich den Vorteil, dass dann, wenn der Wechselrichter wieder in das elektrische Versorgungsnetz einspeist, er sofort in der Höhe Leistung einspeisen kann, in der die Chopper-Schaltung bis zu dem Moment Leistung aus dem Gleichspannungszwischenkreis abgeführt hat.

Optional kann vorgesehen sein, dass im Lichte eines zu erwartenden Netzfehlerendes die Windenergieanlage die erzeugte Leistung erhöht und diese Überschussleistung ebenfalls mittels der Chopper-Schaltung aus dem Gleichspannungszwischenkreis abführt. Wechselt die Windenergieanlage dann nach dem Netzfehler wieder in den Modus des Einspeisens, steht entsprechend diese Überschussleistung ebenfalls zum Einspeisen bereit. Sie bildet dabei sogar einen Steuerbereich, denn sie kann, muss aber nicht in voller Höhe eingespeist werden. Das kann über die Chopper-Schaltung reguliert werden.

Vorzugsweise verwendet die Windenergieanlage im Falle eines Netzwiederaufbaus oder eines Schwarzstarts einen Stützmodus, in dem eine zum Stützen des Netzwiederaufbaus oder eines Schwarzstarts vorbereitete Spannungsregelung und/oder Frequenzregelung verwendet wird. Eine solche Spannungsregelung und/oder Frequenzregelung ist besonders dazu ausgelegt, die Netzspannung bzw. die Netzfrequenz zu regeln. Die entsprechende Netzgröße, nämlich Netzspannung bzw. Netzfrequenz wird dafür zurückgeführt.

Vorzugsweise umfassen die Hilfseinrichtungen wenigstens eine Hilfseinrichtung der folgenden Liste:
- Eine oder mehrere Blattverstelleinrichtungen zum Verstellen der Rotorblätter in ihrem Blattwinkel.
- Eine oder mehrere Azimutverstelleinrichtungen zum Verstellen einer Gondelausrichtung der Windenergieanlage.
- Einen Erregersteller zum Erzeugen eines Erregerstroms des Generators, wenn der Generator als fremderregter Synchrongenerator ausgebildet ist.
- Eine oder mehrere Belüftungseinrichtungen zum Belüften der Windenergieanlage.
- Eine oder mehrere Kühleinrichtungen zum Kühlen des Generators.
- Eine oder mehrere Kühleinrichtungen zum Kühlen von Halbleiterbauelementen, insbesondere in dem Wechselrichter und/oder in der Chopper-Schaltung.
- Eine Steuereinrichtung zum Steuern des Betriebs der Windenergieanlage.

All diese genannten möglichen Hilfseinrichtungen können auch zum Betrieb der Windenergieanlage benötigt werden, wenn die Windenergieanlage aufgrund des Netzfehlers nicht in das elektrische Versorgungsnetz einspeist. Die Bedeutung der Blattverstelleinrichtungen, Azimutverstelleinrichtungen und des Erregerstellers wurden bereits erläutert.

Belüftungseinrichtungen können beispielsweise im Turm, insbesondere im Turmfuß, und/oder in einer Gondel der Windenergieanlage angeordnet sein und für eine Belüftung der Windenergieanlage dort sorgen. Das kann beispielsweise durch ein entsprechendes Gebläse erfolgen, das entsprechend Leistung zum Betrieb benötigt. Ein solches Gebläse muss aber nicht unbedingt dauerhaft eingeschaltet sein und kann somit auch zu einer Schwankung der Leistung für die Hilfseinrichtungen führen.

Auch Kühleinrichtungen, sowohl zum Kühlen des Generators oder zum Kühlen von Halbleiterbauelementen können entsprechende Lüfter aufweisen, die entsprechenden Strom benötigen. Eine Kühleinrichtung des Wechselrichters kann beispielsweise auch dann zumindest kurzfristig benötigt werden, wenn der Wechselrichter nicht in das elektrische Versorgungsnetz einspeist, weil er beispielsweise noch eine hohe Temperatur von seinem Betrieb vor dem Einspeisen hatte. Es kommt auch in Betracht, dass der Wechselrichter zum Betreiben einer Hilfseinrichtung der Windenergieanlage verwendet wird und bei dieser Aktivität gekühlt werden müsste. Davon abgesehen, kann die genannte Chopper-Schaltung auch als Teil des Wechselrichters verstanden werden. Eine solche Chopper-Schaltung kann besonders bei dem vorgeschlagenen Verfahren besonders in vorgeschlagenen Betrieb der Windenergieanlage ohne Einspeisung sehr aktiv sein und entsprechend heiß werden und Kühlung benötigen.

Eine Steuereinrichtung zum Steuern des Betriebs der Windenergieanlage kann besonders als Prozessrechner ausgebildet sein oder einen Prozessrechner umfassen, der ebenfalls besonders unter Verwendung eines entsprechenden Lüfters gekühlt werden muss.

Besonders wird gemäß einer Ausführungsform vorgeschlagen, dass die gedrosselte Leistung in einer solchen Höhe erzeugt wird, dass sie wenigstens einen temporären Leistungsanteil zum Betreiben wenigstens einer nur temporär benötigten Hilfseinrichtung bereitstellen kann. Ein solcher, temporär benötigter Hilfsanteil wird dann entweder zum Betreiben dieser wenigstens einen, nur temporär benötigten Hilfseinrichtung verwendet, oder er wird mittels der Chopper-Schaltung abgeführt. Hier wird also eine Hilfseinrichtung vorgeschlagen, die besonders dadurch zu Schwankungen ihrer Leistungsaufnahme führt, dass sie ein- oder ausgeschaltet wird. Dazu wird vorgeschlagen, dass ausreichend Leistung vom Generator erzeugt wird, um diese Hilfseinrichtung im eingeschalteten Zustand zu versorgen. Ist sie dann ausgeschaltet, wird ihre Leistung weiterhin vom Generator erzeugt, allerdings nicht mehr von der Hilfseinrichtung verbraucht, sondern durch die Chopper-Schaltung abgeführt.

Solche Hilfseinrichtungen können besonders eine der bereits genannten Blattverstelleinrichtungen sein als auch eine der genannten Azimutverstelleinrichtungen, oder jeweils mehrere davon. Solche Verstelleinrichtungen, sowohl die für die Blattverstellung als auch die für die Azimutverstellung, führen regelmäßig keine dauerhafte Verstellaktivität aus, sondern werden grundsätzlich nur bei Bedarf eingeschaltet. Dabei kann ein solcher Bedarf allerdings auch mehrfach pro Minute auftreten.

Erfindungsgemäß wird auch eine Windenergieanlage vorgeschlagen.

Eine solche Windenergieanlage umfasst einen Generator und einen aerodynamischen Rotor mit mehreren Rotorblättern, und die Windenergieanlage umfasst weiter
- einen Generator, der dazu vorbereitet ist, elektrische Leistung aus Wind zu erzeugen,
- eine oder mehrerer Hilfseinrichtungen zum Ausführen von Hilfsfunktionen zum Betrieb der Windenergieanlage, wobei die Hilfseinrichtungen einen ersten Teil der erzeugten elektrischen Leistung als einen Hilfsleistungsteil verwenden, wobei
   - der Hilfsleistungsteil in seiner Höhe bis zu einer Hilfsleistungsobergrenze variiert,
- einen Wechselrichter zum Einspeisen eines zweiten Teils der erzeugten elektrischen Leistung in ein elektrisches Versorgungsnetz, wobei dieser zweite Teil einen Einspeiseleistungsteil bildet, der insbesondere nach Entnahme des ersten Teils verblieben ist,
- eine Steuereinrichtung zum Überprüfen des elektrischen Versorgungsnetzes auf einen Netzfehler, der ein Einspeisen elektrischer Leistung der Windenergieanlage in das elektrische Versorgungsnetz nicht zulässt, wobei
- die Windenergieanlage, insbesondere die Steuereinrichtung dazu vorbereitet ist, den Betrieb der Windenergieanlage bei Erkennen des Netzfehlers fortzusetzen, wobei
   - das Erzeugen der elektrischen Leistung aus Wind auf eine gedrosselte Leistung reduziert wird, wobei
   - die gedrosselte Leistung in ihrer Höhe der Hilfsleistungsobergrenze entspricht, oder darüber liegt,
   - zum Betreiben der Hilfseinrichtungen der benötigte Hilfsleistungsteil aus der gedrosselten Leistung verwendet wird und
   - dabei verbleibende Restleistung der gedrosselten Leistung verbraucht wird, insbesondere in Wärme umgewandelt wird.

Eine solche Windenergieanlage arbeitet somit insbesondere so, wie im Zusammenhang mit vorstehend beschriebenen Ausführungsformen des Verfahrens zum Betreiben einer Windenergieanlage erläutert wurde. Dazu weist die Windenergieanlage besonders einen Wechselrichter und eine oder mehrere Hilfseinrichtungen auf. Ein Wechselrichter kann dabei auch aus mehreren Wechselrichtermodulen zusammengesetzt sein, bzw. insoweit eine Wechselrichtereinrichtung bilden. Als Hilfseinrichtungen kommen besonders solche in Betracht, die vorstehend gemäß wenigstens einer Ausführungsform des Verfahrens zum Betreiben genannt wurden.

Nachfolgend wird die Erfindung exemplarisch anhand von Ausführungsbeispielen unter Bezugnahme auf die begleitenden Figuren näher erläutert.
- Fig. 1: zeigt eine Windenergieanlage in einer perspektivischen Darstellung,
- Fig. 2: einen funktionalen Teil einer Windenergieanlage in einer schematischen Darstellung,
- Fig. 3: ein Diagramm zum Erläutern einer vorgeschlagenen Leistungssteuerung.

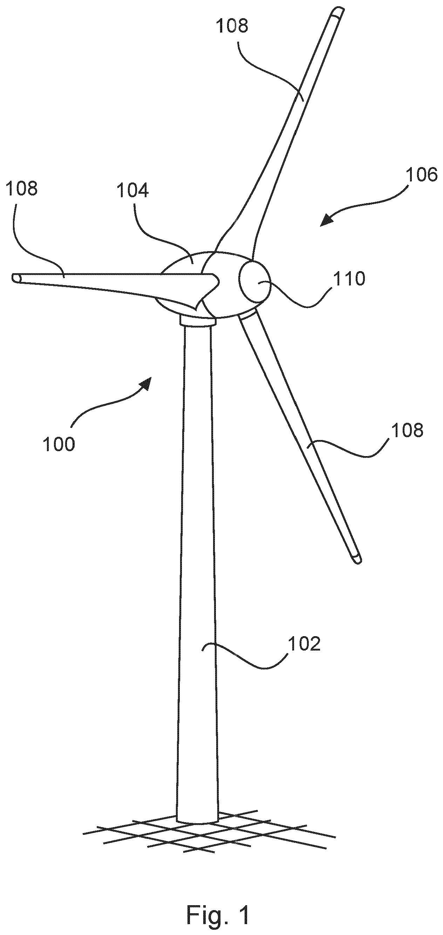

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

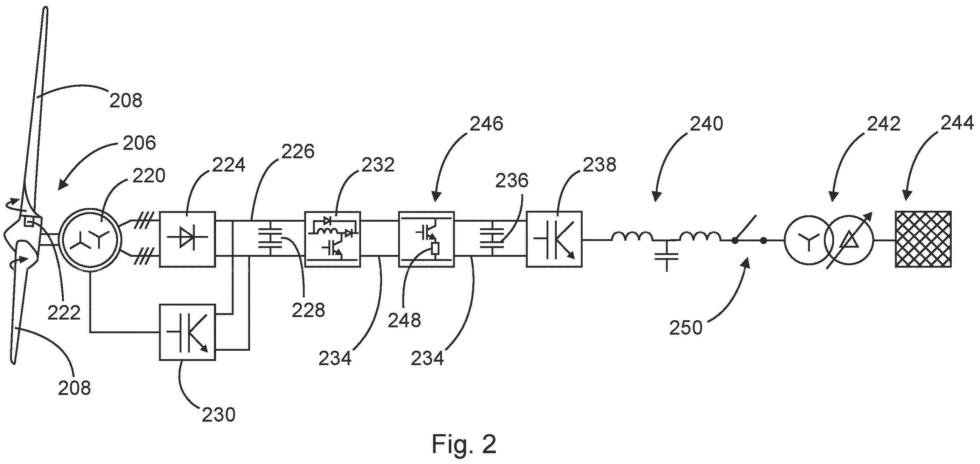

Fig. 2 zeigt besonders einen Leistungsstrang zum Veranschaulichen des Leistungsflusses vom Generator bis zur Netzeinspeisung. Dazu weist die Windenergieanlage einen aerodynamischen Rotor 206 mit mehreren Rotorblättern 208 auf. Im Betrieb wird somit dieser Rotor 206 vom Wind angetrieben und treibt damit einen Generator 220 an.

Der Rotor 206 weist in seinem Anstellwinkel veränderliche Rotorblätter 208 auf. Die Verstellbarkeit der Rotorblätter 208 ist exemplarisch durch zwei Pfeile angedeutet. Zur Verstellung wird für jedes Rotorblatt 208 ein Pitchantrieb 222 verwendet und einer ist davon schematisch als entsprechender Block in Fig. 2 eingezeichnet. Damit kann der Anstellwinkel der Rotorblätter 208 verändert werden, um dadurch die aerodynamische Wirksamkeit des Rotors 206, bezogen auf den Wind, zu verändern. Beispielsweise können die Rotorblätter 208 mittels der Pitchantriebe 222 partiell oder vollständig aus dem Wind gedreht werden, sodass der Rotor 206 dadurch weniger Leistung aus dem Wind entnehmen kann. Im laufenden Betrieb können die Pitchantriebe 222 mit Leistung versorgt werden, die der vom Generator 220 erzeugten Leistung entnommen werden kann.

Der Generator 220 ist hier als fremderregter Synchrongenerator ausgebildet und weist als eine bevorzugte Ausbildungsform eine sechsphasige elektrische Ausführung auf. Demnach sind zwei dreiphasige Statorwicklungen vorhanden und der Generator 220 erzeugt somit einen sechsphasigen Statorstrom, der einem Gleichrichter 224 zugeführt wird.

Der Gleichrichter 224 richtet den so erhaltenen Statorstrom gleich und gibt ihn auf einen ersten Gleichspannungszwischenkreis 226. Der erste Gleichspannungszwischenkreis 226 weist einen ersten Zwischenkreiskondensator 228 auf. Dieser erste Zwischenkreiskondensator 228 kann eine Spannungsglättung oder Spannungsstabilisierung in dem ersten Gleichspannungszwischenkreis 226 bewirken.

Der erste Gleichspannungszwischenkreis 226 versorgt auch einen Erregersteller 230, der einen Erregerstrom, bzw. eine Erregerspannung und damit eine Erregerleistung für den fremderregten Synchrongenerator 220 erzeugt und dem Generator 220 entsprechend zuführt.

Aus Fig. 2 ist dabei auch zu erkennen, dass der Erregersteller 230 seinen Leistungsanteil auch von der Leistung entnimmt, die der Generator 220 aus dem Wind erzeugt.

Außerdem ist ein Hochsetzsteller 232 vorgesehen, der besonders bei geringer Leistungserzeugung durch den Generator 220 die Zwischenkreisspannung des ersten Gleichspannungszwischenkreises 226 anheben kann. Die so erhöhte Gleichspannung wird dann durch den Hochsetzsteller 232 auf dem zweiten Gleichspannungszwischenkreis 234 bereitgestellt. Anstelle des Gleichrichters 224, ersten Gleichspannungszwischenkreises 226, Hochsetzsteller 232 und zweiten Gleichspannungszwischenkreises 234 könnte auch ein gesteuerter Gleichrichter vorgesehen sein, der die erzeugte Generatorleistung unmittelbar mit der gewünschten Spannung am zweiten Gleichspannungszwischenkreis 234 bereitstellt, wobei der zweite Gleichspannungszwischenkreis dann der einzige Gleichspannungszwischenkreis wäre. Der Erregersteller 230 kann dann von diesem einzigen Gleichspannungszwischenkreis mit Leistung versorgt werden. Ein solch gesteuerter Gleichrichter würde somit im Wesentlichen den Gleichrichter 224, ersten Gleichspannungszwischenkreis 226 und Hochsetzsteller 232 ersetzen.

Der zweite Gleichspannungszwischenkreis 234 weist einen zweiten Zwischenkreiskondensator 236 auf, der im Wesentlichen eine ganz ähnliche Funktion wie der erste Zwischenkreiskondensator 228 des ersten Gleichspannungszwischenkreises 226 hat.

Von dem zweiten Gleichspannungszwischenkreis 234 wird die Gleichspannung durch einen Wechselrichter 238 wechselgerichtet und über einen Netzfilter 240 abgegeben und über den Netztransformator 242, der als Stelltransformator ausgebildet sein kann, in das elektrische Versorgungsnetz 244 eingespeist.

Im Normalbetrieb wird somit mit dem Rotor 206 und dem Generator 220 elektrische Leistung aus Wind erzeugt. Ein Teil dieser Leistung wird für Hilfseinrichtungen verwendet, wie die angedeuteten Pitchantriebe 222 und den Erregersteller 230. Es kommen aber auch weitere und/oder andere Hilfseinrichtungen in Betracht, wie beispielsweise eine Azimutverstelleinrichtung, mit der der Rotor 206 dem Wind nachgeführt werden kann. Meist wird dazu die gesamte Gondel, wie die Gondel 104 der Windenergieanlage 100 der Fig. 1 gedreht und in den Wind ausgerichtet.

Die verbleibende Leistung, was üblicherweise der weitaus größere Anteil der erzeugten Leistung ist, wird dann in das elektrische Versorgungsnetz 244 eingespeist.

Im Wesentlichen wird eine Spannungshöhe einer Zwischenkreisspannung des zweiten Gleichspannungszwischenkreises dadurch gesteuert, dass der Wechselrichter 238 entsprechend viel oder wenig Leistung davon wechselrichtet und letztlich ins elektrische Versorgungsnetz 244 einspeist. Das kann besonders auch spannungsabhängig erfolgen, nämlich abhängig von der Zwischenkreisspannung des zweiten Gleichspannungszwischenkreises, sodass der Wechselrichter 238 dann im Wesentlichen die Zwischenkreisspannung des zweiten Gleichspannungszwischenkreises regelt.

Es kann aber auch vorkommen, dass die Zwischenkreisspannung des zweiten Gleichspannungszwischenkreises 234 dennoch einen zu hohen Wert erreicht und dann wird eine ebenfalls in dem zweiten Gleichspannungszwischenkreis 234 angeordnete Chopper-Schaltung 246 Leistung durch Erzeugen entsprechender Strompulse abführen, nämlich derart, dass diese Strompulse zu einem Strom führen, der durch einen Chopper-Widerstand 248 abgeführt wird, indem nämlich die abgeführte Leistung in dem Chopper-Widerstand 248 in Wärme umgewandelt wird.

Tritt nun ein Störbetrieb auf, in dem keine Leistung in das elektrische Versorgungsnetz 244 eingespeist werden kann, was durch den geöffneten Netzschalter 250 angedeutet ist, so wird die von dem Generator 220 erzeugte Leistung reduziert, nämlich auf eine gedrosselte Leistung, die in ihrer Höhe einer Hilfsleistungsobergrenze entspricht. Diese Hilfsleistungsobergrenze gibt die Leistung an, die alle Hilfseinrichtungen der Windenergieanlage zusammen maximal benötigen, zumindest in der aktuellen Betriebssituation maximal benötigen. Dazu können insbesondere die Rotorblätter 208 durch ihre Pitchantriebe 222 so weit aus dem Wind gedreht werden, dass nur noch diese gedrosselte Leistung erzeugt wird.

Die Hilfseinrichtungen verbrauchen aber nicht dauerhaft oder möglicherweise gar nicht, oder fast gar nicht, die gesamte vorgesehene Hilfsleistung gemäß der Hilfsleistungsobergrenze. Besonders sind starke Leistungsschwankungen durch das Zu- und Abschalten von Hilfseinrichtungen zu erwarten. Das betrifft besonders die Pitchantriebe 222, aber auch Azimutantriebe, die oben genannt, aber in Fig. 2 nicht gezeigt sind.

Um einem solchen schwankenden, teilweise sprunghaft schwankenden Leistungsbedarf gerecht zu werden, wird kein Speicher verwendet, sondern stattdessen jeweils überschüssige Leistung durch die Chopper-Schaltung 246 aus dem zweiten Gleichspannungszwischenkreis 234 abgeführt.

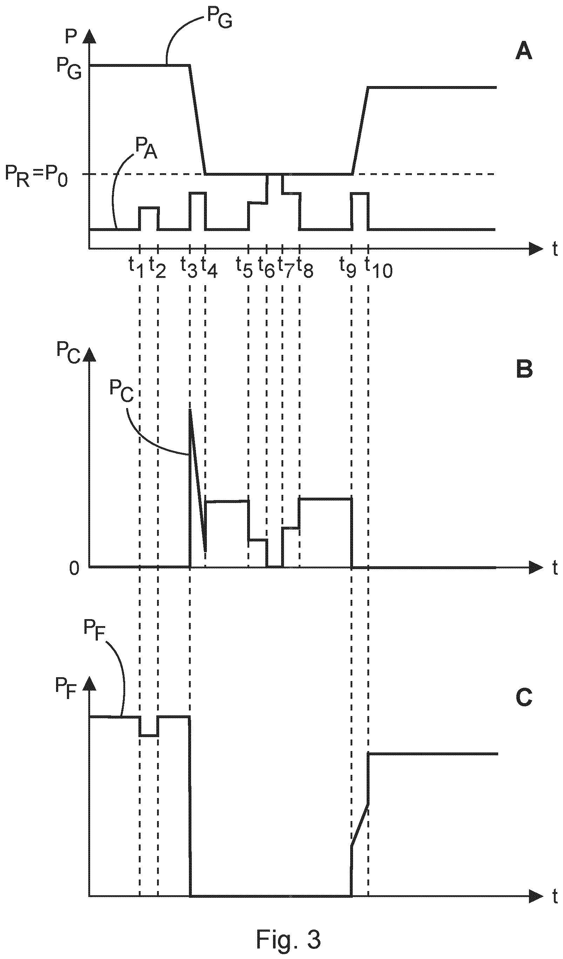

Fig. 3 zeigt schematisch mögliche Leistungsverläufe, um das vorgeschlagene Leistungsmanagement zu veranschaulichen. Fig. 3 zeigt dabei drei übereinander dargestellte Diagramme, die dieselbe Zeitachse verwenden. Im oberen Diagramm A ist durch eine waagerechte gestrichelte Linie die Hilfsleistungsobergrenze P₀ dargestellt. Darunter ist jeweils die insgesamt verbrauchte Hilfsleistung P_{A} aller Hilfseinrichtungen dargestellt. Zum Zwecke der Veranschaulichung sind nur wenige Schwankungen bzw. Variationen der Hilfsleistungen P_{A} gezeigt, nämlich veranschaulichend nur wenige Stufen. Diese Stufen können sich beispielsweise durch das Zu- oder Abschalten der Pitchantriebe und der Azimutantriebe ergeben. Beispielsweise könnte sich zum Zeitpunkt t₁ die Windrichtung derart stark geändert haben, dass die Azimutantriebe die Windenergieanlage dem Wind nachführen und dafür Leistung benötigen, sodass die Hilfsleistung P_{A} dort ansteigt, wobei zum Zeitpunkt t₂ die Azimutverstellung beendet ist. Insoweit zeigt die Hilfsleistung P_{A} verbrauchte Leistung.

In Diagramm A ist außerdem die erzeugte Generatorleistung P_{G} eingezeichnet und das Diagramm beginnt insoweit mit einem Normalbetrieb, bei dem der Generator Leistung erzeugt und diese in das elektrische Versorgungsnetz, nach Abzug der Hilfsleistung P_{A}, einspeist. Entsprechend ist ein Verlauf der Generatorleistung P_{G} gezeigt, die auch schwanken kann.

Zum Zeitpunkt t₃ tritt ein Netzfehler auf, der ein Einspeisen elektrischer Leistung in das elektrische Versorgungsnetz sofort ausschließt. Besonders könnte der in Fig. 2 gezeigte Netztrennschalter 250 dann geöffnet werden. Zu diesem Zeitpunkt wird die Generatorleistung P_{G} dann auf eine gedrosselte Leistung P_{R} reduziert, die im gezeigten Beispiel der Hilfsleistungsobergrenze P₀ entspricht. In anderen Ausführungsformen oder anderen Situationen kann die gedrosselte Leistung P_{R} aber auch größer sein als die Hilfsleistungsobergrenze P₀.

Zum Reduzieren der Generatorleistung werden die Blätter aus dem Wind gedreht, zumindest teilweise, sodass die Pitchantriebe angesteuert werden. entsprechend stellt die Hilfsleistung P_{A}, also die verbrauchte Hilfsleistung, zum Zeitpunkt t₃ dar. Zum Zeitpunkt t₄ hat dann die Blattverstellung mittels der Pitchantriebe ihr Ziel erreicht und die Generatorleistung konnte auf den gewünschten Wert der gedrosselten Leistung P_{R} reduziert werden. Die Pitchantriebe können dann wieder ausgestellt werden, sodass die verbrauchte Hilfsleistung P_{A} auch wieder abfällt.

Ab dem Zeitpunkt t₃ liegt somit ein Netzfehler vor, die Windenergieanlage wird aber im Wesentlichen normal weiterbetrieben, außer dass die Generatorleistung P_{G} auf die gedrosselte Leistung P_{R} reduziert wurde. Auch in diesem gedrosselten Betrieb kann es vorkommen, dass die Windenergieanlage in ihrer Azimutausrichtung wieder nachgeführt werden muss. Das ist beispielsweise exemplarisch zum Zeitpunkt t₅ angedeutet. Bei schwankendem Wind kann es ebenfalls vorkommen, dass eine Pitchverstellung notwendig wird, und dass ist exemplarisch zum Zeitpunkt t₆ veranschaulicht. Zum Zeitpunkt t₆ ist dabei die Azimutverstellung noch immer im Betrieb, sodass sich beide Leistungsbedarfe ergänzen und in diesem Beispiel sogar die Hilfsleistungsobergrenze P₀ erreichen. Zum Zeitpunkt t₇ ist dann die Azimutverstellung beendet, die Pitchverstellung aber noch nicht, die dann aber zum Zeitpunkt t₈ beendet ist.

Zum Zeitpunkt t₈ hat somit die gesamte verbrauchte Hilfsleistung P_{A} einen vergleichbar sehr geringen Wert angenommen. Es werden aber weiterhin Leistungen benötigt, besonders für einen Erregersteller, wie den Erregersteller 230 der Fig. 2. An dieser Stelle wird auch darauf hingewiesen, dass die gezeigten Leistungsamplituden dem Wert nach nicht charakteristisch sein müssen. Besonders ist meist der Hilfsanteil, also die gesamte Hilfsleistung P_{A} ein viel geringerer Anteil an der Generatorleistung P_{G} im Normalbetrieb, also vor dem Zeitpunkt t₃.

Zum Zeitpunkt t₉ wird dann angenommen, dass der Netzfehler beendet ist und die Rotorblätter dann wieder in den Wind gedreht werden, um möglichst viel Leistung zu erzeugen. Es ist dann zum Zeitpunkt t₁₀ beendet und die Generatorleistung P_{G} hat wieder einen normalen Wert angenommen, der nicht dem Wert vor dem Netzfehler entsprechen muss.

Zu dem beispielhaften Leistungsverlauf des Diagramms A ist im Diagramm B zu den entsprechenden Zeiten die von der Chopper-Schaltung verbrauchte Leistung P_{C} illustriert. Im Normalbetrieb, also bis zum Zeitpunkt t₃, braucht keinerlei Leistung verbraucht, also weggechoppert zu werden. Zu Beginn des Netzfehlers zum Zeitpunkt t₃ muss allerdings alle überschüssige Leistung des Generators sofort weggechoppert werden, denn in dem erläuterten Fall wurde sogar der Netzschalter 250 in Fig. 2 geöffnet. Die Chopper-Leistung P_{C} steigt somit zum Zeitpunkt t₃ sprunghaft auf einen hohen Wert an, nämlich die Differenz zwischen der Generatorleistung P_{G} und der Hilfsleistung P_{A}. Mit dem Abfallen der Generatorleistung P_{G} fällt auch die Chopper-Leistung P_{C} entsprechend ab. Sie fällt allerdings nicht auf null ab, weil immer noch mehr Leistung erzeugt wird, als die Hilfseinrichtungen verbrauchen. Die Generatorleistung P_{G} ist also größer als die insgesamt verbrauchte Hilfsleistung P_{A}.

Zum Zeitpunkt t₄ hat die Chopper-Leistung P_{C} einen vergleichsweise geringen Wert erreicht, springt aber sofort wieder hoch, weil die Pitchantriebe ausgeschaltet werden und damit sprunghaft weniger Hilfsleistung P_{A} verbraucht wird. Zum Zeitpunkt t₅ steigt die Hilfsleistung P_{A} aufgrund der Azimutverstellung etwas an, sodass die Chopper-Leistung P_{C} entsprechend abfällt. Zum Zeitpunkt t₆ erreicht die Hilfsleistung P_{A} sogar die Hilfsleistungsobergrenze P₀, sodass die Chopper-Leistung P_{C} auf null abfällt, aber nur bis zum Zeitpunkt t₇. Dann steigt sie wieder an und zum Zeitpunkt t₈ steigt sie erneut an.

Zum Zeitpunkt t₉ ist dann der Netzfehler beendet und damit fällt die Chopper-Leistung P_{C} ab, weil nun die Leistung in das elektrische Versorgungsnetz eingespeist wird. Auch dies ist veranschaulichend dargestellt. In einem Fall kommt hier auch in Betracht, dass zum Erreichen einer stabilen Netzsituation nach dem Netzfehler nicht sofort die ganze erzeugbare Leistung eingespeist wird, sondern die Leistung zum Beispiel langsam ansteigt. Entsprechend können entweder die Rotorblätter langsamer verstellt werden und/oder auch zum Hochfahren der eingespeisten Leistung kann die Chopper-Schaltung verwendet werden und einen Teil der Leistung wegchoppern.

Diagramm C erläutert den Verlauf der eingespeisten Leistung P_{F}. Zu Beginn wird die Generatorleistung P_{G} abzüglich der Hilfsleistung P_{A} eingespeist. Zum Zeitpunkt t₁ wird etwas mehr Hilfsleistung P_{A} verwendet, wegen der beschriebenen Azimutverstellung, und diese geht von der eingespeisten Leistung P_{F} ab, die somit dort entsprechend verringert wird. Zum Zeitpunkt t₂ steigt sie aber wieder an, bis zum Zeitpunkt t₃. Zum Zeitpunkt t₃ tritt ein Netzfehler auf und die eingespeiste Leistung fällt sofort auf null ab.

Erst zum Zeitpunkt t₉ steigt die eingespeiste Leistung wieder an. Zu diesem Zeitpunkt kann sie sprunghaft, um den Wert der Chopper-Leistung abzüglich der nun benötigten Leistung für die Pitchantriebe, ansteigen. Zum Zeitpunkt t₂ fällt dann auch die Leistung für die Pitchantriebe weg und die eingespeiste Leistung P_{F} kann entsprechend erhöht werden.

Es ist somit zu erkennen, dass die Hilfsantriebe immer ausreichend Leistung erhalten, auch im Netzfehlerfall, ohne dass ein Speicher benötigt wird. Die Steuerung kann wie bisher durchgeführt werden, insbesondere kann auch die Ansteuerung der Chopper-Schaltung wie bisher verwendet werden. Durch die Nichtabnahme der Leistung im Gleichspannungszwischenkreis, nämlich beispielsweise im Gleichspannungszwischenkreis 234 der Fig. 2, kann die Zwischenkreisspannung des zweiten Gleichspannungszwischenkreises so stark ansteigen, dass die Chopper-Schaltung auslöst und die nicht abgenommene Leistung verbraucht. Ergänzend kann hier auch die Ansprechspannung der Chopper-Schaltung heruntergesetzt werden.

## Patentansprüche

1. Verfahren zum Betreiben einer Windenergieanlage (100), wobei die Windenergieanlage (100) einen Generator (220) und einen aerodynamischen Rotor (106) mit mehreren Rotorblättern (108) aufweist, umfassend die Schritte:
- Erzeugen elektrischer Leistung mittels des Generators (220) aus Wind,
- Verwenden eines ersten Teils der erzeugten elektrischen Leistung als einen Hilfsleistungsteil zum Versorgen von zum Betrieb der Windenergieanlage (100) benötigter Hilfseinrichtungen der Windenergieanlage (100), wobei
- der Hilfsleistungsteil in seiner Höhe bis zu einer Hilfsleistungsobergrenze (P₀) variiert,
- Einspeisen eines zweiten Teils der erzeugten elektrischen Leistung, der insbesondere nach Entnahme des ersten Teils verblieben ist, als Einspeiseleistungsteil in ein elektrisches Versorgungsnetz (244),
- Überprüfen des elektrischen Versorgungsnetzes (244) auf einen Netzfehler, der ein Einspeisen elektrischer Leistung der Windenergieanlage (100) in das elektrische Versorgungsnetz (244) nicht zulässt,
- Fortsetzen des Betriebs der Windenergieanlage (100) bei Erkennen des Netzfehlers, wobei
- das Erzeugen der elektrischen Leistung aus Wind auf eine gedrosselte Leistung (P_{R}) reduziert wird, wobei
- die gedrosselte Leistung (P_{R}) in ihrer Höhe der Hilfsleistungsobergrenze (P₀) entspricht, oder darüber liegt,
- zum Betreiben der Hilfseinrichtungen der benötigte Hilfsleistungsteil aus der gedrosselten Leistung (P_{R}) verwendet wird und
- dabei verbleibende Restleistung der gedrosselten Leistung (P_{R}) verbraucht wird, insbesondere in Wärme umgewandelt wird,
**dadurch gekennzeichnet, dass** die Hilfsleistungsobergrenze (P₀)
- in Abhängigkeit eines aktuellen Arbeitspunktes der Windenergieanlage (100) bestimmt wird,
- in Abhängigkeit von Systemeigenschaften der Windenergieanlage (100) bestimmt wird, und/oder
- in einem vorbestimmten Messzeitraum vor dem Auftreten des Netzfehlers erfasst wird.

2. Verfahren nach Anspruch 1, **dadurch gekennzeichnet, dass**
- zum Einspeisen elektrischer Leistung ein Wechselrichter (238) mit einem Gleichspannungszwischenkreis verwendet wird,
- bei Erkennen des Netzfehlers die gedrosselte Leistung (P_{R}), oder ein Teil davon, an den Gleichspannungszwischenkreis übertragen wird, ohne dass der Wechselrichter (238) Leistung in das elektrische Versorgungsnetz (244) einspeist, und
- Leistung aus dem Gleichspannungszwischenkreis, insbesondere die verbleibende Restleistung oder ein Teil davon, mittels einer Chopper-Schaltung (246) in einen Chopper-Widerstand (248) zur Umwandlung in Wärme abgeführt wird, wobei insbesondere
- die Chopper-Schaltung (246) Leistung aus dem Gleichspannungszwischenkreis in Abhängigkeit einer erfassten Zwischenkreisspannung abführt und/oder
- wenigstens eine Hilfseinrichtung aus dem Gleichspannungszwischenkreis mit Leistung versorgt wird.

3. Verfahren nach einem der vorstehenden Ansprüche, **dadurch gekennzeichnet, dass** bei dem Erkennen des Netzfehlers der Hilfsleistungsteil weiterhin vom Generator (220) zur Versorgung an die Hilfseinrichtungen übertragen wird, ohne zusätzliche Zwischenspeicherung in einem elektrischen Speicher, insbesondere
- ohne längerfristige Zwischenspeicherung in einem elektrischen Speicher, insbesondere
- ohne Zwischenspeicherung über einen Zeitraum, der länger als 100ms ist.

4. Verfahren nach einem der vorstehenden Ansprüche, **dadurch gekennzeichnet, dass** bei dem Erkennen des Netzfehlers
- eine Leistungsversorgung der Hilfseinrichtungen unverändert fortgesetzt wird, und/oder
- die Hilfseinrichtungen nicht gedrosselt werden.

5. Verfahren nach einem der vorstehenden Ansprüche, **dadurch gekennzeichnet, dass** bei dem Erkennen des Netzfehlers die Windenergieanlage (100) vom elektrischen Versorgungsnetz (244) getrennt wird.

6. Verfahren nach einem der vorstehenden Ansprüche, **dadurch gekennzeichnet, dass** bei dem Erkennen des Netzfehlers und im Anschluss daran die Windenergieanlage (100) weiter betrieben wird, ohne elektrische Leistung in das elektrische Versorgungsnetz (244) einzuspeisen, bis der Netzfehler behoben ist, um
- dann ohne Verzögerung das Einspeisen elektrischer Leistung in das elektrische Versorgungsnetz (244) wieder aufzunehmen, und/oder
- das elektrische Versorgungsnetz (244) oder einen Teil davon in einem Schwarzstartmodus wieder hochzufahren, wobei insbesondere
- eine bzw. die Zwischenkreisspannung eines bzw. des Gleichspannungszwischenkreises eines bzw. des Wechselrichters (238) mittels einer bzw. der Chopper-Schaltung (246) während des Netzfehlers auf einen vorbestimmten Bereitschaftsspannungswert gesteuert wird.

7. Verfahren nach einem der vorstehenden Ansprüche, **dadurch gekennzeichnet, dass** die Hilfseinrichtungen wenigstens eine Hilfseinrichtung umfassen aus der Liste aufweisend:
- eine oder mehrere Blattverstelleinrichtungen zum Verstellen der Rotorblätter (108) in ihrem Blattwinkel,
- eine oder mehrere Azimutverstelleinrichtungen zum Verstellen einer Gondelausrichtung der Windenergieanlage (100),
- einen Erregersteller (230) zum Erzeugen eines Erregerstroms des Generators (220), wenn der Generator (220) als fremderregter Synchrongenerator ausgebildet ist,
- Belüftungseinrichtungen zum Belüften der Windenergieanlage (100),
- Kühleinrichtungen zum Kühlen des Generators (220),
- Kühleinrichtungen zum Kühlen von Halbleiterbauelementen, insbesondere
- in einem bzw. dem Wechselrichter (238) und
- in einer bzw. der Chopper-Schaltung (246), und
- eine Steuereinrichtung zum Steuern des Betriebs der Windenergieanlage (100).

8. Verfahren nach einem der vorstehenden Ansprüche, **dadurch gekennzeichnet, dass**
die gedrosselte Leistung (P_{R}) in einer solchen Höhe erzeugt wird, dass sie wenigstens einen temporären Leistungsanteil zum Betreiben wenigstens einer nur temporär benötigten Hilfseinrichtung bereitstellen kann, wobei
- der wenigstens eine temporäre Leistungsanteil entweder zum Betreiben der wenigstens einen nur temporär benötigten Hilfseinrichtung verwendet wird, oder
- der wenigstens eine temporäre Leistungsanteil mittels einer bzw. der Chopper-Schaltung (246) abgeführt wird, wobei insbesondere die wenigstens eine temporäre Hilfseinrichtung wenigstens eine Hilfseinrichtung ist aus der Liste aufweisend:
- eine oder mehrere Blattverstelleinrichtungen, zum Verstellen der Rotorblätter (108) in ihrem Blattwinkel und
- eine oder mehrere Azimutverstelleinrichtungen, zum Verstellen einer Gondelausrichtung der Windenergieanlage (100).

9. Windenergieanlage (100) mit einem aerodynamischen Rotor (106) mit mehreren Rotorblättern (108), und die Windenergieanlage (100) umfasst
- einen Generator (220), der dazu vorbereitet ist, elektrische Leistung aus Wind zu erzeugen,
- eine oder mehrerer Hilfseinrichtungen zum Ausführen von Hilfsfunktionen zum Betrieb der Windenergieanlage (100), wobei die Hilfseinrichtungen einen ersten Teil der erzeugten elektrischen Leistung als einen Hilfsleistungsteil verwenden, wobei
- der Hilfsleistungsteil in seiner Höhe bis zu einer Hilfsleistungsobergrenze (P₀) variiert,
- einen Wechselrichter (238) zum Einspeisen eines zweiten Teils der erzeugten elektrischen Leistung in ein elektrisches Versorgungsnetz (244), wobei dieser zweite Teil einen Einspeiseleistungsteil bildet, der insbesondere nach Entnahme des ersten Teils verblieben ist,
- eine Steuereinrichtung zum Überprüfen des elektrischen Versorgungsnetzes (244) auf einen Netzfehler, der ein Einspeisen elektrischer Leistung der Windenergieanlage (100) in das elektrische Versorgungsnetz (244) nicht zulässt, wobei
- die Windenergieanlage (100), insbesondere die Steuereinrichtung dazu vorbereitet ist, den Betrieb der Windenergieanlage (100) bei Erkennen des Netzfehlers fortzusetzen, wobei
- das Erzeugen der elektrischen Leistung aus Wind auf eine gedrosselte Leistung (P_{R}) reduziert wird, wobei
- die gedrosselte Leistung (P_{R}) in ihrer Höhe der Hilfsleistungsobergrenze (P₀) entspricht, oder darüber liegt,
- zum Betreiben der Hilfseinrichtungen der benötigte Hilfsleistungsteil aus der gedrosselten Leistung (P_{R}) verwendet wird und
- dabei verbleibende Restleistung der gedrosselten Leistung (P_{R}) verbraucht wird, insbesondere in Wärme umgewandelt wird,
**dadurch gekennzeichnet, dass** die Hilfsleistungsobergrenze (P₀)
- in Abhängigkeit eines aktuellen Arbeitspunktes der Windenergieanlage (100) bestimmt wird,
- in Abhängigkeit von Systemeigenschaften der Windenergieanlage (100) bestimmt wird, und/oder
- in einem vorbestimmten Messzeitraum vor dem Auftreten des Netzfehlers erfasst wird.

10. Windenergieanlage (100) nach Anspruch 9, **dadurch gekennzeichnet, dass**
die Windenergieanlage (100), insbesondere die Steuereinrichtung, dazu vorbereitet ist, ein Verfahren nach einem der Ansprüche 1 bis 8 auszuführen.

11. Windenergieanlage (100) nach Anspruch 9 oder 10, **dadurch gekennzeichnet, dass**
- der Wechselrichter (238) einen Gleichspannungszwischenkreis aufweist und
- eine an den Gleichspannungszwischenkreis angeschlossene Chopper-Schaltung (246) mit einem Chopper-Widerstand (248), wobei die Windenergieanlage (100) und der Wechselrichter (238) dazu vorbereitet sind, dass
- bei Erkennen des Netzfehlers die gedrosselte Leistung (P_{R}), oder ein Teil davon, an den Gleichspannungszwischenkreis übertragen wird, ohne dass der Wechselrichter (238) Leistung in das elektrische Versorgungsnetz (244) einspeist, und
- Leistung aus dem Gleichspannungszwischenkreis, insbesondere die verbleibende Restleistung oder ein Teil davon, mittels der Chopper-Schaltung (246) in den Chopper-Widerstand (248) zur Umwandlung in Wärme abgeführt wird, wobei insbesondere
- die Chopper-Schaltung (246) Leistung aus dem Gleichspannungszwischenkreis in Abhängigkeit einer erfassten Zwischenkreisspannung abführt und/oder
- wenigstens eine Hilfseinrichtung aus dem Gleichspannungszwischenkreis mit Leistung versorgt wird.

12. Windenergieanlage (100) nach einem der Ansprüche 9 bis 11, **dadurch gekennzeichnet, dass** die Hilfseinrichtungen wenigstens eine Hilfseinrichtung umfassen aus der Liste aufweisend:
- eine oder mehrere Blattverstelleinrichtungen zum Verstellen der Rotorblätter (108) in ihrem Blattwinkel,
- eine oder mehrere Azimutverstelleinrichtungen zum Verstellen einer Gondelausrichtung der Windenergieanlage (100),
- einen Erregersteller (230) zum Erzeugen eines Erregerstroms des Generators (220), wenn der Generator (220) als fremderregter Synchrongenerator ausgebildet ist,
- Belüftungseinrichtungen zum Belüften der Windenergieanlage (100),
- Kühleinrichtungen zum Kühlen des Generators (220),
- Kühleinrichtungen zum Kühlen von Halbleiterbauelementen, insbesondere
- in einem bzw. dem Wechselrichter (238) und
- in einer bzw. der Chopper-Schaltung (246), und
- die Steuereinrichtung zum Steuern des Betriebs der Windenergieanlage (100).

## Claims

1. A method for operating a wind turbine (100), the wind turbine (100) having a generator (220) and an aerodynamic rotor (106) with a number of rotor blades (108), comprising the steps of:
- generating electrical power from wind by means of the generator (220),
- using a first part of the generated electrical power as an auxiliary power component for supplying auxiliary devices of the wind turbine (100) that are required for operating the wind turbine (100), wherein
- the auxiliary power component varies in its level up to an upper auxiliary power limit (P₀),
- feeding a second part of the generated electrical power, which in particular remains after removal of the first part, into an electrical supply grid (244) as a feed-in power component,
- checking the electrical supply grid (244) for a grid fault that does not allow feeding of electrical power of the wind turbine (100) into the electrical supply grid (244),
- continuing the operation of the wind turbine (100) when the grid fault is detected, wherein
- the generation of electrical power from wind is reduced to a cut-back power (P_{R}), wherein
- the cut-back power (P_{R}) corresponds in its level to the upper auxiliary power limit (P₀), or lies above it,
- the required auxiliary power component for operating the auxiliary devices is used from the cut-back power (P_{R}) and
- residual power of the cut-back power (P_{R}) remaining in this case is consumed, in particular is converted into heat,
**characterized in that** the upper auxiliary power limit (P₀)
- is determined in dependence on an operating point at the time of the wind turbine (100),
- is determined in dependence on system properties of the wind turbine (100), and/or
- is sensed in a predetermined measuring time period before the occurrence of the grid fault.

2. The method as claimed in claim 1, **characterized in that**
- an inverter (230) with a DC link is used for the feeding in of electrical power,
- when the grid fault is detected, the cut-back power (P_{R}), or part of it, is transferred to the DC link without the inverter (238) feeding power into the electrical supply grid (244), and
- power from the DC link, in particular the remaining residual power, or part of it, is removed by means of a chopper circuit (246) into a chopper resistor (248) for conversion into heat, wherein in particular
- the chopper circuit (246) removes power from the DC link in dependence on a sensed link voltage and/or
- at least one auxiliary device is supplied with power from the DC link.

3. The method as claimed in one of the preceding claims, **characterized in that**, when the grid fault is detected, the auxiliary power component continues to be transferred by the generator (220) to the auxiliary devices for supplying them, without additional buffer storage in an electrical store, in particular
- without prolonged buffer storage in an electrical store, in particular
- without buffer storage over a time period that is longer than 100 ms.

4. The method as claimed in one of the preceding claims, **characterized in that**, when the grid fault is detected,
- supplying power to the auxiliary devices is continued unchanged, and/or
- the auxiliary devices are not cut back.

5. The method as claimed in one of the preceding claims, **characterized in that**, when the grid fault is detected, the wind turbine (100) is disconnected from the electrical supply grid (244).

6. The method as claimed in one of the preceding claims, **characterized in that**, when the grid fault is detected and after that, the wind turbine (100) continues to be operated without feeding electrical power into the electrical supply grid (244) until the grid fault is rectified, in order
- then to resume the feeding of electrical power into the electrical supply grid (244) without delay, and/or
- to run up the electrical supply grid (244) or part thereof again in a black starting mode, wherein in particular
- a or the link voltage of a or the DC link of a or the inverter (238) is controlled to a predetermined standby voltage value by means of a or the chopper circuit (246) during the grid fault.

7. The method as claimed in one of the preceding claims, **characterized in that** the auxiliary devices comprise at least one auxiliary device from the list comprising:
- one or more blade adjustment devices for adjusting the rotor blades (108) in their blade angle,
- one or more azimuth adjusting devices for adjusting a nacelle alignment of the wind turbine (100),
- an exciter generator (230) for generating an exciter current of the generator (220) if the generator (220) is formed as a separately excited synchronous generator,
- ventilating devices for ventilating the wind turbine (100),
- cooling devices for cooling the generator (220),
- cooling devices for cooling semiconductor components, in particular
- in a or the inverter (238) and
- in a or the chopper circuit (246), and
- a control device for controlling the operation of the wind turbine (100).

8. The method as claimed in one of the preceding claims, **characterized in that**
the cut-back power (P_{R}) is generated at such a level that it can provide at least a temporary power component for operating at least one only temporarily required auxiliary device, wherein
- the at least one temporary power component is either used for operating the at least one only temporarily required auxiliary device, or
- the at least one temporary power component is removed by means of a or the chopper circuit (246), wherein in particular the at least one temporary auxiliary device is at least one auxiliary device from the list comprising:
- one or more blade adjusting devices for adjusting the rotor blades (108) in their blade angle and
- one or more azimuth adjusting devices for adjusting a nacelle alignment of the wind turbine (100).

9. A wind turbine (100) comprising an aerodynamic rotor (106) with a number of rotor blades (108), and the wind turbine (100) comprises
- a generator (220), which is prepared to generate electrical power from wind,
- one or more auxiliary devices for performing auxiliary functions for the operation of the wind turbine (100), the auxiliary devices using a first part of the generated electrical power as an auxiliary power component, wherein
- the auxiliary power component varies in its level up to an upper auxiliary power limit (P₀),
- an inverter (238) for feeding a second part of the generated electrical power into an electrical supply grid (244), this second part forming a feed-in power component, which in particular has remained after removal of the first part,
- a control device for checking the electrical supply grid (244) for a grid fault that does not allow feeding of electrical power of the wind turbine (100) into the electrical supply grid (244), wherein
- the wind turbine (100), in particular the control device, is prepared to continue the operation of the wind turbine (100) when the grid fault is detected, wherein
- generation of the electrical power from wind is reduced to a cut-back power (P_{R}), wherein
- the cut-back power (P_{R}) corresponds in its level to the upper auxiliary power limit (P₀), or lies above it,
- the required auxiliary power component for operating the auxiliary devices is used from the cut-back power (P_{R}) and
- residual power of the cut-back power (P_{R}) remaining in this case is consumed, in particular is converted into heat,
**characterized in that** the upper auxiliary power limit (P₀)
- is determined in dependence on an operating point at the time of the wind turbine (100),
- is determined in dependence on system properties of the wind turbine (100), and/or
- is sensed in a predetermined measuring time period before the occurrence of the grid fault.

10. The wind turbine (100) as claimed in claim 9, **characterized in that**
the wind turbine (100), in particular the control device, is prepared to perform a method as claimed in one of claims 1 to 8.

11. The wind turbine (100) as claimed in claim 9 or 10, **characterized in that**
- the inverter (238) has a DC link and
- a chopper circuit (246) connected to the DC link and comprising a chopper resistor (248), wherein the wind turbine (100) and the inverter (238) are prepared for the purpose that
- when the grid fault is detected, the cut-back power (P_{R}), or part of it, is transferred to the DC link without the inverter (238) feeding power into the electrical supply grid (244), and
- power from the DC link, in particular the remaining residual power, or part of it, is removed by means of the chopper circuit (246) into the chopper resistor (248) for conversion into heat, wherein in particular
- the chopper circuit (246) removes power from the DC link in dependence on a sensed link voltage and/or
- at least one auxiliary device is supplied with power from the DC link.

12. The wind turbine (100) as claimed in one of claims 9 to 11, **characterized in that** the auxiliary devices comprise at least one auxiliary device from the list comprising:
- one or more blade adjustment devices for adjusting the rotor blades (108) in their blade angle,
- one or more azimuth adjusting devices for adjusting a nacelle alignment of the wind turbine (100),
- an exciter generator (230) for generating an exciter current of the generator (220) if the generator (220) is formed as a separately excited synchronous generator,
- ventilating devices for ventilating the wind turbine (100),
- cooling devices for cooling the generator (220),
- cooling devices for cooling semiconductor components, in particular
- in a or the inverter (238) and
- in a or the chopper circuit (246), and
- the control device for controlling the operation of the wind turbine (100).

## Revendications

1. Procédé de fonctionnement d'une éolienne (100), dans lequel l'éolienne (100) présente un générateur (220) et un rotor aérodynamique (106) avec plusieurs pales de rotor (108), comprenant les étapes :
- de production de puissance électrique à partir du vent au moyen du générateur (220),
- d'utilisation d'une première partie de la puissance électrique produite comme partie de puissance auxiliaire pour alimenter les dispositifs auxiliaires de l'éolienne (100) nécessaires au fonctionnement de l'éolienne (100), dans lequel
- la partie de puissance auxiliaire varie en niveau jusqu'à une limite supérieure de puissance auxiliaire (P₀),
- d'injection d'une deuxième partie de la puissance électrique produite, qui est restée en particulier après prélèvement de la première partie, en tant que partie de puissance injectée dans un réseau d'alimentation électrique (244),
- de contrôle du réseau d'alimentation électrique (244) en vue d'y détecter une défaillance de réseau qui ne permet pas une injection de puissance électrique de l'éolienne (100) dans le réseau d'alimentation électrique (244),
- de poursuite du fonctionnement de l'éolienne (100) en cas de détection de la défaillance de réseau, dans lequel
- la production de la puissance électrique à partir du vent est réduite à une puissance limitée (P_{R}), dans lequel
- la puissance limitée (P_{R}) correspond en niveau à la limite supérieure de puissance auxiliaire (P₀), ou est supérieure à celle-ci,
- pour le fonctionnement des dispositifs auxiliaires la partie de puissance auxiliaire nécessaire est utilisée à partir de la puissance limitée (P_{R}) et
- ce faisant, la puissance résiduelle restante de la puissance limitée (P_{R}) est consommée, en particulier convertie en chaleur,
**caractérisé en ce que** la limite supérieure de puissance auxiliaire (P₀)
- est déterminée en fonction d'un point de travail actuel de l'éolienne (100),
- est déterminée en fonction de propriétés système de l'éolienne (100), et/ou
- est enregistrée dans une période de mesure prédéterminée avant l'apparition de la défaillance de réseau.

2. Procédé selon la revendication 1, **caractérisé en ce que**
- un onduleur (238) avec un circuit intermédiaire à tension continue est utilisé pour injecter la puissance électrique,
- en cas de détection de la défaillance de réseau, la puissance limitée (P_{R}), ou une partie de celle-ci, est transmise au circuit intermédiaire à tension continue sans que l'onduleur (238) n'injecte de puissance dans le réseau d'alimentation électrique (244), et
- la puissance provenant du circuit intermédiaire à tension continue, en particulier la puissance résiduelle restante ou une partie de celle-ci, est évacuée au moyen d'un circuit de hachage (246) dans une résistance de hachage (248) pour conversion en chaleur, dans lequel en particulier
- le circuit de hachage (246) évacue de la puissance du circuit intermédiaire à tension continue en fonction d'une tension de circuit intermédiaire enregistrée et/ou
- au moins un dispositif auxiliaire est alimenté en puissance à partir du circuit intermédiaire à tension continue.

3. Procédé selon l'une quelconque des revendications précédentes, **caractérisé en ce que**, lors de la détection de la défaillance de réseau, la partie de puissance auxiliaire continue à être transmise par le générateur (220) pour l'alimentation des dispositifs auxiliaires, sans stockage intermédiaire supplémentaire dans un accumulateur électrique, en particulier
- sans stockage temporaire à long terme dans un accumulateur électrique, en particulier
- sans stockage intermédiaire pendant une durée qui est supérieure à 100 ms.

4. Procédé selon l'une quelconque des revendications précédentes, **caractérisé en ce que**, lors de la détection de la défaillance de réseau
- une alimentation en puissance des dispositifs auxiliaires est poursuivie sans modification, et/ou
- les dispositifs auxiliaires ne sont pas limités.

5. Procédé selon l'une quelconque des revendications précédentes, **caractérisé en ce que**, lors de la détection de la défaillance de réseau, l'éolienne (100) est déconnectée du réseau d'alimentation électrique (244).

6. Procédé selon l'une quelconque des revendications précédentes, **caractérisé en ce que**, lors de la détection de la défaillance de réseau et après cela, l'éolienne (100) continue à fonctionner sans puissance électrique dans le réseau d'alimentation électrique (244), jusqu'à ce que la défaillance de réseau soit résolue, afin de
- reprendre alors sans délai l'injection de puissance électrique dans le réseau d'alimentation électrique (244), et/ou
- redémarrer le réseau d'alimentation électrique (244) ou une partie de celui-ci dans un mode démarrage autonome, dans lequel en particulier
- une ou la tension de circuit intermédiaire d'un ou du circuit intermédiaire à tension continue d'un ou de l'onduleur (238) est commandée à une valeur de tension de disponibilité prédéterminée au moyen d'un ou du circuit de hachage (246) pendant la défaillance de réseau.

7. Procédé selon l'une quelconque des revendications précédentes, **caractérisé en ce que** les dispositifs auxiliaires comprennent au moins un dispositif auxiliaire de la liste présentant :
- un ou plusieurs dispositifs de réglage de pales pour régler les pales de rotor (108) dans leur angle de pale,
- un ou plusieurs dispositifs de réglage d'azimut pour régler un alignement de nacelle de l'éolienne (100),
- un actionneur d'excitation (230) pour produire un courant d'excitation du générateur (220), lorsque le générateur (220) est réalisé comme un générateur synchrone à excitation séparée,
- des dispositifs de ventilation pour ventiler l'éolienne (100),
- des dispositifs de refroidissement pour refroidir le générateur (220),
- des dispositifs de refroidissement pour refroidir des composants semi-conducteurs, en particulier
- dans un ou l'onduleur (238) et
- dans un ou le circuit de hachage (246), et
- un dispositif de commande pour commander le fonctionnement de l'éolienne (100).

8. Procédé selon l'une quelconque des revendications précédentes, **caractérisé en ce que** la puissance limitée (P_{R}) est produite à un niveau tel qu'elle peut fournir au moins une part de puissance temporaire pour le fonctionnement d'au moins un dispositif auxiliaire nécessaire uniquement temporairement, dans lequel
- l'au moins une part de puissance temporaire soit est utilisée pour faire fonctionner l'au moins un dispositif auxiliaire nécessaire uniquement temporairement, soit
- l'au moins une part de puissance temporaire est évacuée au moyen d'un ou du circuit de hachage (246), dans lequel en particulier l'au moins un dispositif auxiliaire temporaire est au moins un dispositif auxiliaire de la liste présentant :
- un ou plusieurs dispositifs de réglage de pales, pour régler les pales de rotor (108) dans leur angle de pale et
- un ou plusieurs dispositifs de réglage d'azimut, pour régler un alignement de nacelle de l'éolienne (100).

9. Éolienne (100) avec un rotor aérodynamique (106) avec plusieurs pales de rotor (108), et l'éolienne (100) comprend
- un générateur (220), qui est destiné à produire de la puissance électrique à partir du vent,
- un ou plusieurs dispositifs auxiliaires pour exécuter des fonctions auxiliaires pour le fonctionnement de l'éolienne (100), dans laquelle les dispositifs auxiliaires utilisent une première partie de la puissance électrique produite comme partie de puissance auxiliaire, dans laquelle
- la partie de puissance auxiliaire varie en niveau jusqu'à une limite supérieure de puissance auxiliaire (P₀),
- un onduleur (238) pour injecter une deuxième partie de la puissance électrique produite dans un réseau d'alimentation électrique (244), dans laquelle cette deuxième partie forme une partie de puissance d'injection qui est restée en particulier après prélèvement de la première partie,
- un dispositif de commande pour contrôler le réseau d'alimentation électrique (244) en vue d'y détecter une défaillance de réseau qui ne permet pas une injection de puissance électrique de l'éolienne (100) dans le réseau d'alimentation électrique (244), dans laquelle
- l'éolienne (100), en particulier le dispositif de commande, est destinée à poursuivre le fonctionnement de l'éolienne (100) en cas de détection de la défaillance de réseau, dans laquelle
- la production de la puissance électrique à partir du vent est réduite à une puissance limitée (P_{R}), dans lequel
- la puissance limitée (P_{R}) correspond en niveau à la limite supérieure de puissance auxiliaire (P₀), ou est supérieure à celle-ci,
- pour le fonctionnement des dispositifs auxiliaires, la partie de puissance auxiliaire nécessaire est utilisée à partir de la puissance limitée (P_{R}) et
- ce faisant, la puissance résiduelle restante de la puissance limitée (P_{R}) est consommée, en particulier convertie en chaleur,
**caractérisée en ce que** la limite supérieure de puissance auxiliaire (P₀)
- est déterminée en fonction d'un point de travail actuel de l'éolienne (100),
- est déterminée en fonction de propriétés système de l'éolienne (100), et/ou
- est enregistrée dans une période de mesure prédéterminée avant l'apparition de la défaillance de réseau.

10. Éolienne (100) selon la revendication 9, **caractérisée en ce que**
l'éolienne (100), en particulier le dispositif de commande, est destinée à exécuter un procédé selon l'une quelconque des revendications 1 à 8.

11. Éolienne (100) selon la revendication 9 ou 10, **caractérisée en ce que**
- l'onduleur (238) présente un circuit intermédiaire à tension continue et
- un circuit de hachage (246) raccordé au circuit intermédiaire à tension continue avec une résistance de hachage (248), dans laquelle l'éolienne (100) et l'onduleur (238) sont destinés à ce que
- en cas de détection de la défaillance de réseau, la puissance limitée (P_{R}), ou une partie de celle-ci, soit transmise au circuit intermédiaire à tension continue sans que l'onduleur (238) n'injecte de puissance dans le réseau d'alimentation électrique (244), et
- la puissance provenant du circuit intermédiaire à tension continue, en particulier la puissance résiduelle restante ou une partie de celle-ci, est évacuée au moyen du circuit de hachage (246) dans la résistance de hachage (248) pour conversion en chaleur, dans laquelle en particulier
- le circuit de hachage (246) évacue de la puissance du circuit intermédiaire à tension continue en fonction d'une tension de circuit intermédiaire enregistrée et/ou
- au moins un dispositif auxiliaire est alimenté en puissance à partir du circuit intermédiaire à tension continue.

12. Éolienne (100) selon l'une quelconque des revendications 9 à 11, **caractérisée en ce que** les dispositifs auxiliaires comprennent au moins un dispositif auxiliaire de la liste présentant :
- un ou plusieurs dispositifs de réglage de pales pour régler les pales de rotor (108) dans leur angle de pale,
- un ou plusieurs dispositifs de réglage d'azimut pour régler un alignement de nacelle de l'éolienne (100),
- un actionneur d'excitation (230) pour produire un courant d'excitation du générateur (220), lorsque le générateur (220) est réalisé comme un générateur synchrone à excitation séparée,
- des dispositifs de ventilation pour ventiler l'éolienne (100),
- des dispositifs de refroidissement pour refroidir le générateur (220),
- des dispositifs de refroidissement pour refroidir des composants semi-conducteurs, en particulier
- dans un ou l'onduleur (238) et
- dans un ou le circuit de hachage (246), et
- le dispositif de commande pour commander le fonctionnement de l'éolienne (100).
